(19) Europäisches Patentamt / European Patent Office / Office européen des brevets

(11) **EP 4 412 104 A1**

(12) **EUROPEAN PATENT APPLICATION**

(43) Date of publication:
**07.08.2024 Bulletin 2024/32**

(21) Application number: **23155025.2**

(22) Date of filing: **06.02.2023**

(51) International Patent Classification (IPC):
***H04B 7/08*** *(2006.01)*

(52) Cooperative Patent Classification (CPC):
**H04B 7/088**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **DHERE, Amol**
**9260 Gistrup (DK)**
• **ROM, Christian**
**9210 Aalborg (DK)**
• **OLESEN, Poul**
**9530 Støvring (DK)**

(74) Representative: **Nokia EPO representatives**
**Nokia Technologies Oy**
**Karakaari 7**
**02610 Espoo (FI)**

(54) **METHOD FOR BEAM MANAGEMENT**

(57) A method comprising: receiving, by an apparatus comprising one or more antenna panels for receiving beams, a frame structure comprising a plurality of time slots, wherein each time slot comprises a plurality of orthogonal frequency-division modulated (OFDM) symbols and at least one guard period; performing beam sweeping over a plurality of received beams during said guard period; and aligning the apparatus to receive on a best beam of at least one antenna panel determined based on the beam sweeping.

600 — Receive, by an apparatus comprising one or more antenna panels, a frame structure comprising a plurality of time slots, wherein each time slot comprises a plurality of OFDM symbols and at least one guard period

602 — Perform beam sweeping over a plurality of received beams during said guard period

604 — Align the apparatus to receive on a best beam of at least one antenna panel determined based on the beam sweeping

**FIG. 6**

**Description**

<u>**TECHNICAL FIELD**</u>

The present invention relates to beam management procedures.

<u>**BACKGROUND**</u>

In 5G NR networks, especially when considering operating a user equipment (UE) in the Frequency Range 2 (FR2; 24.25 GHz to 52.6 GHz) including the mmWave range, the LTE implementation is expected to have multiple antenna panels (Multi-Panel UE, MPUE) to perform beam steering over a large solid angle aiming to maximize the reliability. Depending on the configuration of the UE, the MPLTE may be provided with multiple panels, but for some MPUEs only one panel can be activated at a time.

A 3-step (P1-P2-P3) beam alignment procedure is applied in 5G, which includes several measurements the LTE has to perform to enable the network to manage the gNB and LTE beams. The P3 process allows a LTE to perform a beam sweep without the penalty of received data packet acknowledgements. The base station, in turn, needs to repeat the same downlink Channel State Information-Reference Signal (CSI-RS) beam over several time intervals, which also occupies resources typically over an entire bandwidth part (BWP).

Consequently, when several LTEs in a cell need to align their respective Rx beams using the P3 process, the overhead of the used radio resources grows linearly and becomes a very undesirable effect, since these resources could otherwise be used for data traffic and thus increase the system spectral efficiency.

Thus, there is a need for beam alignment procedure enabling to at least reduce too frequent triggering of the P3 procedure at the UE.

<u>**SUMMARY**</u>

Now, an improved method and technical equipment implementing the method has been invented, by which the above problems are alleviated. Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising one or more antenna panels for receiving beams; means for receiving a frame structure comprising a plurality of time slots, wherein each time slot comprises a plurality of orthogonal frequency-division modulated (OFDM) symbols and at least one guard period; means for performing beam sweeping over a plurality of received beams during said guard period; and means for aligning the apparatus to receive on a best beam of at least one antenna panel determined based on said beam sweeping.

According to an embodiment, the apparatus comprises means for switching from a currently determined best beam to measuring at least another beam after a start of said guard period; and means for switching to receive on the best beam of the at least one antenna panel before an end of said guard period.

According to an embodiment, the apparatus comprises means for measuring said at least another beam during multiple guard periods; and means for determining the best beam of at least one antenna panel.

According to an embodiment, the apparatus comprises means for determining the best beam for a plurality of antenna panels during said multiple guard periods; and means for aligning the apparatus to receive on an antenna panel receiving the best beam among said plurality of antenna panels.

According to an embodiment, said frame structure is a Physical Downlink Shared Channel (PDSCH) frame and said guard period comprises a cyclic prefix or a part of it within said frame.

According to an embodiment, the apparatus comprises means for determining a value of one or more parameters so as to enable to perform said beam sweeping over the plurality of received beams during said guard period.

According to an embodiment, said one or more parameters comprise:

- number of beam directions to sweep;
- number of symbols per beam direction to sweep; and/or
- an oversampling factor and a half power beam width to be used in said beam sweeping.

According to an embodiment, the apparatus comprises means for determining the value of one or more parameters per antenna panel.

According to an embodiment, the apparatus comprises means for determining the best beam of said at least one antenna panel using a single beam-specific metric, wherein said metric is at least partly determined based on a correlation between said guard period and a plurality of OFDM symbols of said frame.

According to an embodiment, the apparatus comprises means for determining a standard deviation of time offset over multiple OFDM symbols and across vertical and horizontal polarizations of an antenna panel per beam; means for determining a standard deviation of frequency offset over the multiple OFDM symbols and across the vertical and the horizontal polarizations of the antenna panel per beam; wherein said metric is determined based on weighted sum of signal strength value of the beam, the correlation, the standard deviation of the time offset and the standard deviation of the frequency offset.

According to an embodiment, the apparatus comprises means for checking, prior to performing the beam sweeping during said guard period, that a signal level of a currently best beam is more than or equal to a predetermined threshold value; and if affirmative, performing the beam sweeping during said guard period.

A method according to a second aspect comprises receiving, by an apparatus comprising one or more antenna panels for receiving beams, a frame structure comprising a plurality of time slots, wherein each time slot comprises a plurality of orthogonal frequency-division modulated (OFDM) symbols and at least one guard period; performing beam sweeping over a plurality of received beams during said guard period; and aligning the apparatus to receive on a best beam of at least one antenna panel determined based on the beam sweeping.

Computer readable storage media according to further aspects comprise code for use by an apparatus, which when executed by a processor, causes the apparatus to perform the above methods.


## BRIEF DESCRIPTION OF THE DRAWINGS

For a more complete understanding of the example embodiments, reference is now made to the following descriptions taken in connection with the accompanying drawings in which:

Fig. 1 shows a schematic block diagram of an apparatus for incorporating the embodiments;
Fig. 2 shows schematically a layout of an apparatus according to an example embodiment;
Fig. 3 shows a part of an exemplifying radio access network;
Fig. 4 shows an example of a LTE with multiple antenna panels;
Fig. 5 shows an example of three phases of a known beam alignment procedure;
Fig. 6 shows a flow chart for a beam alignment procedure according to an embodiment;
Figs. 7a and 7b show examples of a cyclic prefix for an OFDM signal;
Fig. 8 shows an example of carrying out a blind beam sweeping during PDSCH CP time as a comparison of a known P3 procedure and the P3 procedure according to an embodiment;
Fig. 9 shows a state diagram for a beam alignment procedure according to an embodiment;
Fig. 10 shows an example of impacts of different oversampling factors and beamwidths to the beam alignment procedure;
Fig. 11 shows an example of a typical FR2 transmit/receive chain;
Fig. 12 shows an implementation example of the embodiments in a baseband unit of an apparatus; and
Fig. 13 shows an implementation example of the embodiments using analog components.


## DETAILED DESCRIPTON OF SOME EXAMPLE EMBODIMENTS

The following describes in further detail suitable apparatus and possible mechanisms carrying out the beam management operations. While the following focuses on 5G networks, the embodiments as described further below are by no means limited to be implemented in said networks only, but they are applicable in any network supporting beam management operations.

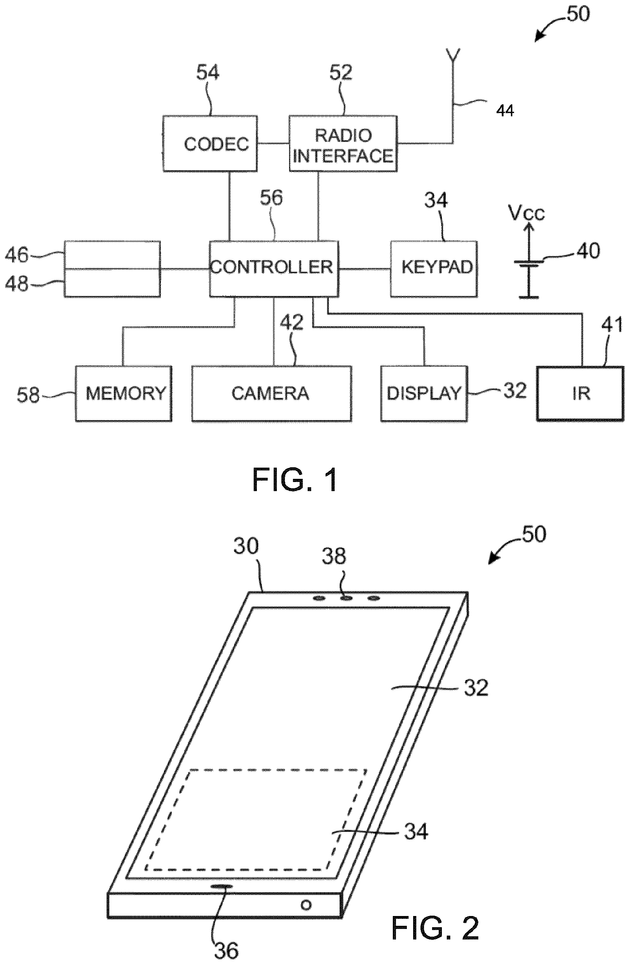

In this regard, reference is first made to Figures 1 and 2, where Figure 1 shows a schematic block diagram of an exemplary apparatus or electronic device 50, which may incorporate the arrangement according to the embodiments. Figure 2 shows a layout of an apparatus according to an example embodiment. The elements of Figs. 1 and 2 will be explained next.

The electronic device 50 may for example be a mobile terminal or user equipment of a wireless communication system. The apparatus 50 may comprise a housing 30 for incorporating and protecting the device. The apparatus 50 further may comprise a display 32 and a keypad 34. Instead of the keypad, the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, such as anyone of: an earpiece 38, speaker, or an analogue audio or digital audio output connection. The apparatus 50 may also comprise a battery 40 (or the device may be powered by any suitable mobile energy device such as solar cell, fuel cell or clockwork generator). The apparatus may further comprise a camera 42 capable of recording or capturing images and/or video. The apparatus 50 may further comprise an infrared port 41 for short range line of sight communication to other devices. In other embodiments the apparatus 50 may further comprise any suitable short-range communication solution such as for example a Bluetooth wireless connection or a USB/firewire wired connection.

The apparatus 50 may comprise a controller 56 or processor for controlling the apparatus 50. The controller 56 may be connected to memory 58 which may store both user data and instructions for implementation on the controller 56. The memory may be random access memory (RAM) and/or read only memory (ROM). The memory may store computer-readable, computer-executable software including instructions that, when executed, cause the controller/processor to perform various functions described herein. In some cases, the software may not be directly executable by the processor but may cause a computer (e.g., when compiled and executed) to perform functions described herein. The controller 56 may further be connected to codec circuitry 54 suitable for carrying out coding and decoding of audio and/or video data or assisting in coding and decoding carried out by the controller.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In the following, different exemplifying embodiments will be described using, as an example of an access architecture to which the embodiments may be applied, a radio access architecture based on Long Term Evolution Advanced (LTE Advanced, LTE-A) or new radio (NR, 5G), without restricting the embodiments to such an architecture, however. A person skilled in the art appreciates that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet protocol multimedia subsystems (IMS) or any combination thereof.

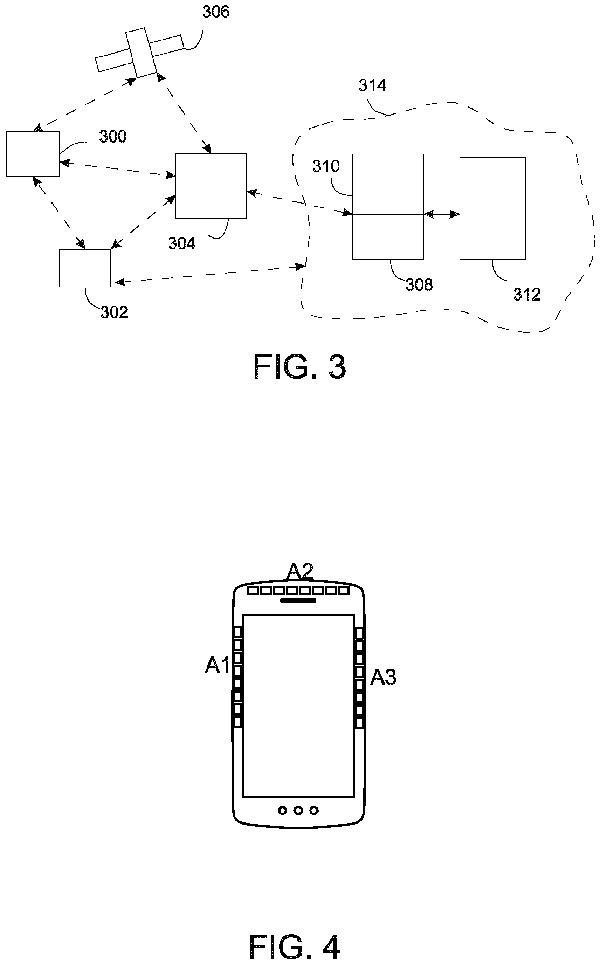

Figure 3 depicts examples of simplified system architectures only showing some elements and functional entities, all being logical units, whose implementation may differ from what is shown. The connections shown in Figure 3 are logical connections; the actual physical connections may be different. It is apparent to a person skilled in the art that the system typically comprises also other functions and structures than those shown in Figure 3. The embodiments are not, however, restricted to the system given as an example but a person skilled in the art may apply the solution to other communication systems provided with necessary properties.

The example of Figure 3 shows a part of an exemplifying radio access network.

Figure 3 shows user devices 300 and 302 configured to be in a wireless connection on one or more communication channels in a cell with an access node (such as (e/g)NodeB) 304 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of user devices (LTEs) to external packet data networks, or mobile management entity (MME), etc. The CN may comprise network entities or nodes that may be referred to management entities. Examples of the network entities comprise at least an Access and Mobility Management Function (AMF).

The user device (also called a user equipment (LTE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an IoT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (LTE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the LTEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of e.g. hundreds of antenna elements, implemented in a single antenna panel or in a plurality of antenna panels, capable of using a plurality of simultaneous radio beams for communication with the UE. The UEs may be provided with MIMO antennas having an antenna array consisting of e.g. dozens of antenna elements, implemented in a single antenna panel or in a plurality of antenna panels. Thus, the LTE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced e.g. via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 3 by "cloud" 314). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU) and non-real time functions being carried out in a centralized manner (in a centralized unit, CU 308).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize non-terrestrial nodes 306, e.g. access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

The Radio Resource Control (RRC) protocol is used in various wireless communication systems for defining the air interface between the LTE and a base station, such as eNB/gNB. This protocol is specified by 3GPP in in TS 36.331 for LTE and in TS 38.331 for 5G. In terms of the RRC, the LTE may operate in LTE and in 5G in an idle mode or in a connected mode, wherein the radio resources available for the LTE are dependent on the mode where the LTE at present resides. In 5G, the LTE may also operate in inactive mode. In the RRC idle mode, the LTE has no connection for communication, but the LTE is able to listen to page messages. In the RRC connected mode, the UE may operate in different states, such as CELL_DCH (Dedicated Channel), CELL_FACH (Forward Access Channel), CELL_PCH (Cell Paging Channel) and URA_PCH (URA Paging Channel). The LTE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states are controlled by a state machine of the RRC. When the LTE is powered up, it is in a disconnected mode/idle mode. The LTE may transit to RRC connected mode with an initial attach or with a connection establishment. If there is no activity from the LTE for a short time, eNB/gNB may suspend its session by moving to RRC Inactive mode and can resume its session by moving to RRC connected mode. The LTE can move to the RRC idle mode from the RRC connected mode or from the RRC inactive mode.

The actual user and control data from network to the LTEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a LTE to access the 5G network.

The user and control data from LTE to the network is transmitted via uplink physical channels, which in 5G include Physical Uplink Control Channel (PUCCH), which is used for uplink control information including HARQ feedback acknowledgments, scheduling request, and downlink channel-state information for link adaptation, Physical Uplink Shared Channel (PUSCH), which is used for uplink data transmission, and Physical Random Access Channel (PRACH), which is used by the LTE to request connection setup referred to as random access.

In 5G/NR, numerology refers to Sub Carrier Spacing (SCS). In contrast to only one SCS (15 kHz) used in 4G/LTE, the 3GPP Release 17 provides 7 types of numerology $\mu$ (SCS 15, 30, 60, 120, 240, 480, 960 kHz) for 5G/NR. A frame, having a duration of 10 ms, consists of 10 subframes with each having 1 ms duration. Each subframe consists of $2^\mu$ slots, where $\mu$ can be any value from 0 to 6. The number of OFDM symbols per time slot remains the same (14) for all SCSs, while the number of time slots per frame increase along the higher SCSs.

A plurality of SCSs are needed, since the 5G/NR should cover very wide range of operating frequency (both FR1 and FR2), and a single subcarrier space could not cover the whole frequency range without sacrificing the performance. While all numerologies cannot be used for every physical channel and signals, most of the numerologies may nevertheless be used on any type of physical channels in 5G.

For the 5G technology, one of the most important design goals has been improved metrics of reliability and latency, in addition to network resilience and flexibility.

Especially when considering the operation of the LTE in the Frequency Range 2 (FR2; 24.25 GHz to 52.6 GHz) including the mmWave range, the LTE implementation is expected to have multiple antenna panels (Multi-Panel LTE, MPLTE) to perform beam steering over a large solid angle aiming to maximize the reliability. Figure 4 shows an example of a LTE with multiple panels A1, A2, A3, each panel consisting of an antenna array comprising a plurality of antenna elements, such as an array of 1x8 antenna elements.

An antenna panel comprises a group of antenna elements typically in a linear or rectangular equi-spaced constellation, where each antenna element is connected to a RF structure with purpose of controlling the radiation of the group or sub-group of antenna elements to form a single radiation pattern per group or subgroup.

Typically, in an antenna panel at the LTE, each linear array of equi-spaced patch antennas is connected to a phase shifter, and further to a linear amplifier or a power amplifier provided with a switch to control switching between uplink and downlink. Signals from a group of antennas with respective connected RF components are then fed to one combiner in order to form a single signal per polarisation. This signal then adopts the radiation pattern properties of panel.

The MPUE may exhibit different implementations regarding its capabilities for simultaneous transmission/reception:

- MPUE-Assumption1: Multiple panels are implemented on a LTE and only one panel can be activated at a time, with a panel switching/activation delay of few ms;
- MPLTE-Assumption2: Multiple panels are implemented on a LTE and multiple panels can be activated at a time and one or more panels can be used for Tx;
- MPLTE-Assumption3: Multiple panels are implemented on a LTE and multiple panels can be activated at a time but only one panel can be used for Tx.

In order to obtain full beam gain, a beam alignment procedure according to TS 38.214 3GPP TSG RAN WG1, "NR; Physical layer procedures for data," 03.04.2020, relies on a 3-step approach, which includes several measurements the LTE has to perform to aid the network with management of the gNB and LTE beams.

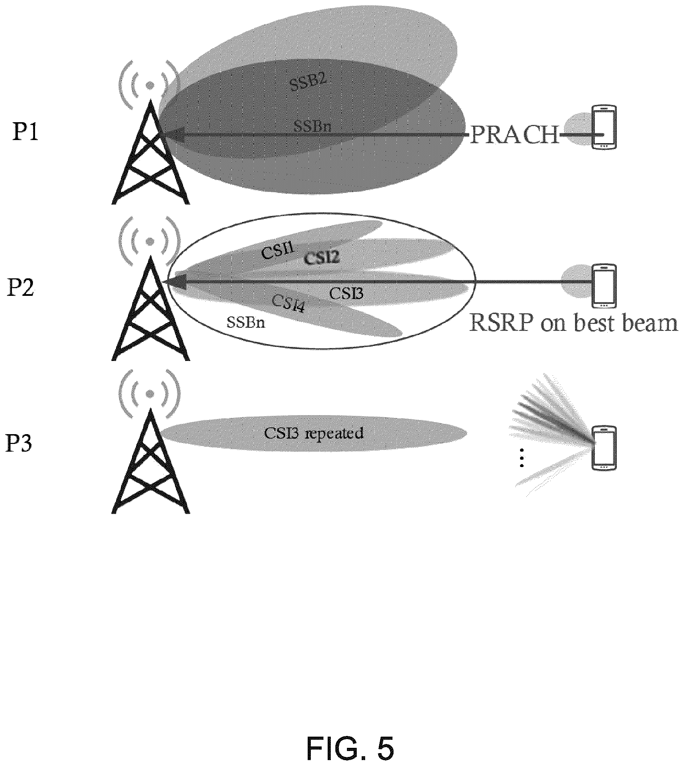

The three phases are illustrated in Figure 5:

- Phase 1 (P1): The LTE performs measurements based on periodic SSB burst transmissions for selection of the best wide gNB beams, with a typical periodicity of 20 ms. In case of MPLTE, selecting best panel across all received SSB blocks is required during P1.
- Phase 2 (P2): The LTE performs measurements based on Channel State Information-Reference Signal (CSI-RS) or SSB reference symbols for gNB narrow beam refinement.
- Phase 3 (P3): The LTE performs measurements based on a repeated CSI-RS reference symbol for LTE narrow beam refinement. The P3 process aims at identifying the best LTE beam to maximize the received RSRP at the LTE. The P3 process allows a LTE to perform a beam sweep without the penalty of received data packet NACKs. During this process the base station needs to repeat the same Downlink CSI-RS beam over several time intervals, typically over many OFDM symbols. For a MPLTE, the P3 procedure is typically conducted with the panel found to be best during a previous panel scan run by the MPLTE.

P1, P2 and P3 are continuously being utilized and the best beam being tracked and reported (e.g. based on their reference signal received power (L1-RSRP) value or signal-to-interference+noise ratio (SINR) values) to assist the serving cell to control the serving beam.

LTEs with analog beamforming can operate only one beam at a time. Hence, the P3 beam alignment procedure spans over multiple time intervals during which the LTE carries out measurements with one beam at a time. During this time, the base station (e.g. gNB) maintains its Tx beam and the beamformed reference signal (aperiodic CSI-RS with repetition), which also occupies resources typically over an entire bandwidth part (BWP). When several LTEs in a cell need to align their respective Rx beams, the overhead of the needed resource elements grows linearly and becomes a very undesirable effect, since these resources could otherwise be used for data traffic and thus increase the system spectral efficiency.

The P3 procedure is typically meant to be used, for example, whenever there is a handover, SSB beam switch, or a LTE panel switch. However, it may also be triggered due to a radio channel angular change or due to blockers of line-of-sight appearing during LTE mobility, which may result in a drop of uplink/downlink RSRP.

For example, if there is a LTE moving in a cell, it will require roughly 5-10 alignments per second. Assuming 10 LTEs in a cell will result in 50 - 100 slots being used for alignment per second. At higher speeds or higher density of LTEs in a cell this could be even 10 times higher. Accordingly, given that there are only 8000 slots (with 120 KHz SCS) per second of which 4000 to 6000 slots are for downlink, there is a significant overhead for maintaining beam alignment. In the worst case, close to 20% of resources could end up being used for LTE Rx beam alignment.

Frequent triggering of P3 procedure can be avoided or at least reduced, if the LTE can align its Rx beams as well as possible whenever the periodic CSI-RS or PDSCH is scheduled. However, beam sweeping during PDSCH is difficult as the LTE needs to use its pre-determined best Rx beam for reception to maintain the required SINR.

In the following, an enhanced method for beam alignment will be described in more detail, in accordance with various embodiments.

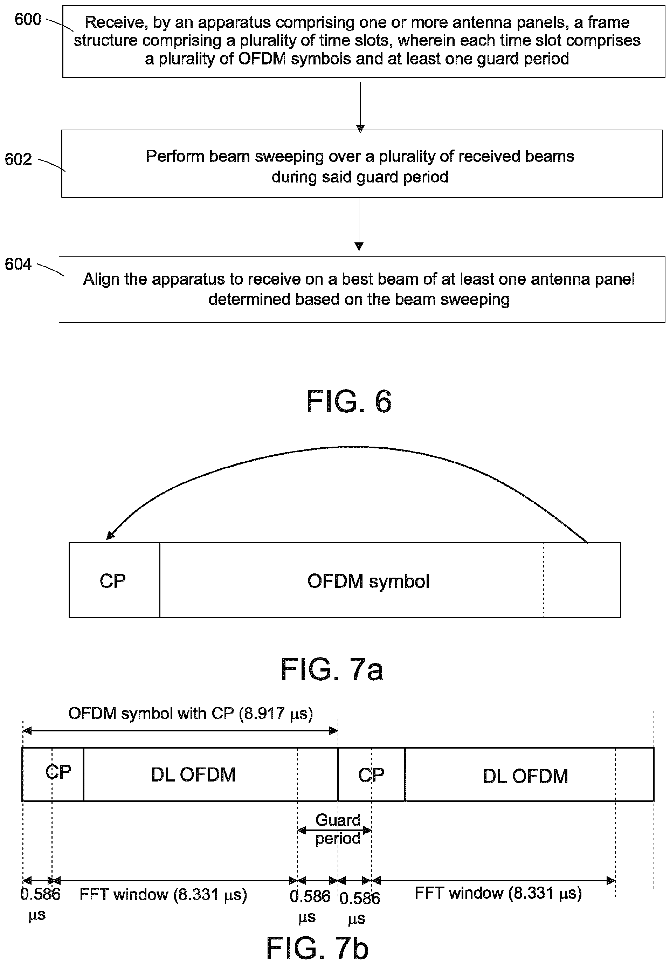

The method, which is disclosed in flow chart of Figure 6 as reflecting the operation of a terminal apparatus, such as a user equipment (LTE), wherein the method comprises receiving (600), by an apparatus comprising one or more antenna panels for receiving beams, a frame structure comprising a plurality of time slots, wherein each time slot comprises a plurality of orthogonal frequency-division modulated (OFDM) symbols and at least one guard period; performing (602) beam sweeping over a plurality of received beams during said guard period; and aligning (604) the apparatus to receive on a best beam of at least one antenna panel determined based on the beam sweeping.

Thus, the method utilises a guard period within a time slot of a frame structure received via a serving beam for performing beam sweeping over a plurality of received beams. Such guard period is typically used for synchronization purposes, and it is discarded by the LTE. Provided that relatively low symbol rates in comparison to the used sampling rates are used, the guard period may provide a sufficient time period for the LTE to carry out measurements for other beam directions than the current Rx beam direction and ensure that the best Rx beam is used for reception, thereby reducing the need for triggering the P3 procedure.

It is noted that herein the term 'beam' refers to the associated radiation pattern of the active panel or subpanel at the time of reception of the signal.

According to an embodiment, said frame structure is a Physical Downlink Shared Channel (PDSCH) frame and said guard period comprises a cyclic prefix or a part of it within said frame.

In the following, various embodiments are described using the cyclic prefix (CP) of the PDSCH as the example for implementing the embodiments. It is, however, noted that while the CP of a PDSCH frame addresses many problems relating to too frequent triggering of the P3 procedure, the embodiments are equally applicable to any guard period of a frame structure enabling a beam sweeping.

The cyclic prefix (CP) is used to combat the inter-symbol interference (ISI) and intra-symbol interference in a multipath channel. The CP is a guard period made up of a replicate of a part of the back of the OFDM signal to the front to create the guard period, as shown in Figure 7a. There are two types of CPs used in 5G/NR, i.e. a normal CP type and an extended CP type. For the normal CP type, each slot occupies 14 OFDM symbols and for extended CP type, each slot occupies 12 OFDM symbols. The extended CP type is used for the numerology $\mu$ = 2 (SCS of 60 KHz) only.

Thus, the cyclic prefix (CP) reception time of the downlink PDSCH is utilised for performing the Rx beam sweeping. The CP is normally just discarded by the LTE, but now its duration may be used for carrying out measurements not requiring full OFDM symbols (e.g., Received Signal Strength Indicator (RSSI) and correlations) on other beam directions than the current Rx beam direction.

Figure 7b shows an example of configuring a FFT (Fast Fourier Transform) window in a LTE, which typically comprises a part of the cyclic prefix. Thus, the guard period between two FFT windows comprises a part of the ending OFDM symbol and a part of the CP, i.e. the remaining part of the next CP not belonging to the FFT window. The durations of the OFDM symbols and the CP parts are only examples applicable in FR2 including the mmWave range.

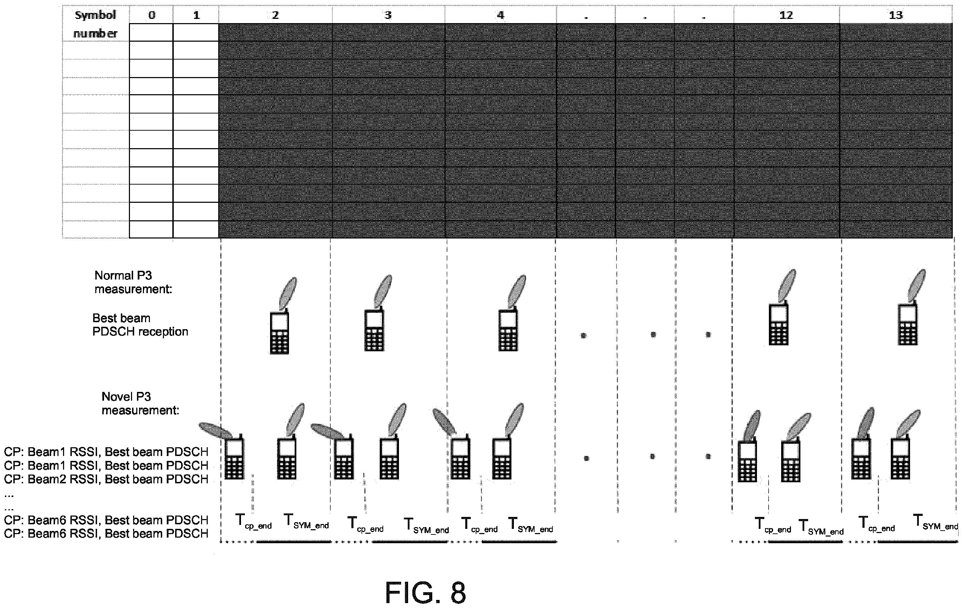

PDSCH is also beamformed similar to the periodic or aperiodic CSI-RS and is a dedicated channel for the LTE. It is also precoded and can be multiplexed with PDSCH of other LTEs in the same Tx beam (assuming analog beamforming at gNB). Figure 8 shows an example of carrying out a blind beam sweeping during PDSCH CP time. As can be seen, a LTE carries out a beam sweeping over 6 Rx beams using cyclic prefix of 2 consecutive PDSCH symbols for measuring a signal strength value (e.g. RSSI) over 1 Rx beam direction.

According to an embodiment, the method comprises switching from a currently determined best beam to measuring at least another beam after a start of said guard period; and switching to receive on the best beam of the at least one antenna panel before an end of said guard period.

Hence, in response to the cyclic prefix period starting, the LTE may switch from the currently best determined Rx beam to measure another Rx beam(s). This involves a short delay caused by a beam switch time and, depending on the used channelization filter, a settling time of the filter. The UE measures the other Rx beam(s), for example, according to a predetermined schedule. Before the cyclic prefix period ends, the LTE switch back to the normal PSDCH reception using the Rx beam determined to be currently the best Rx beam. Again, the delay(s) for switching need to be taken into account to ensure that the switching is completed before the end of the cyclic prefix period.

According to an embodiment, the method comprises measuring said at least another beam during multiple guard periods; and determining the best beam of at least one antenna panel.

The measurement of another beam may be repeated over multiple cyclic prefix periods, whereupon the LTE determines the best Rx beam, which may be the same Rx beam as previously considered the best or it may be any of the other Rx beams measured during said multiple cyclic prefix periods.

Regarding the feasibility of the cyclic prefix of the PSDCH for beam sweeping, an example of numerology $\mu$ = 3 (120 kHz subcarrier spacing SCS) or higher may be considered. Therein, the number of samples during normal cyclic prefix is 288. A sample time for sampling the RF signal for a state-of-art implementation is 2.034 ns. A beam switch time for an ordinary RF switch is typically less than 20 ns. Thus, the resulting time for beam sweeping during the CP is at least 288*2.034-2*20 = 546 ns.

The 546 ns available for beam sweeping during the CP applies when the PDSCH bandwidth of the LTE is at the maximum supported bandwidth. If PDSCH bandwidth is less than the maximum and a channelization filter is used, the amount of time available for beam measurements is reduced. This is because a switch in beam direction can lead to a sudden change of power level, which may be very large (e.g. 30 dB) and require time for the output to settle.

For example, a transition time required for a sudden change of 30 dB in power level with a filter bandwidth of 10 MHz is about 100ns. However, with larger filter bandwidth of 50 MHz or larger (which is typical for FR2), the transition time will drop and can be expected to be about 20 ns or less. This will reduce the amount of time available for beam sweeping by about 40 ns when a 50 MHz channelization filter is used for the PDSCH. For a 400 MHz channelization filter, the transition time is practically negligible. Accordingly:

- Available time accounting for 10 MHz channel filter settling time = 546 - 200 = 346 ns
- Available time accounting for 50 MHz channel filter settling time = 546 - 40 = 500 ns
- Available time accounting for 400 MHz channel filter settling time = ~546 ns

The number of samples required to have reasonable probability of false detection varies with the measured RSSI, but the above times may be considered sufficient for carrying out the beam sweeping on a satisfactory level.

According to an embodiment, the method comprises checking, prior to performing the beam sweeping during said guard period, that a signal level of a currently best beam is more than or equal to a predetermined threshold value; and if affirmative, performing the beam sweeping during said guard period.

Thus, there exists a threshold below which the beam sweeping during said guard period should not be performed. The threshold may depend on implementation, but if the scheme is based on RSSI measurements alone, the threshold value may be, for example, about 3 to 6 dB above the noise floor. For digital embodiments, other metrics may be also used, wherein the RSSI measurements-based threshold can be even lower.

According to an embodiment, the method comprises determining the best beam for a plurality of antenna panels during said multiple guard periods; and aligning the apparatus to receive on an antenna panel receiving the best beam among said plurality of antenna panels.

For an MPLTE, the method may comprise performing the beam sweeping process for each panel independently, whereupon each panel may have its best Rx beam determined. Then among the panels actively used for PDSCH reception, the apparatus may select the antenna panel receiving the best Rx beam to continue the PDSCH reception.

According to an embodiment, the method comprises determining a value of one or more parameters so as to enable to perform said beam sweeping over the plurality of received beams during said guard period.

Thus, the method may comprise beam search budgeting, wherein the parameters for the beam sweeping process are scaled and timing requirements for the beam switch are adjusted such that the normal PDSCH reception during the useful part of OFDM symbol is not impacted. The beam search budgeting can be run over a number of consecutive or nonconsecutive PDSCH slots over a certain period.

According to an embodiment, said one or more parameters comprise:

- number of beam directions to sweep;
- number of symbols per beam direction to sweep; and/or
- an oversampling factor and a half power beam width to be used in said beam sweeping.

For ensuring that the beam sweeping may be accomplished during the cyclic prefix period, it may be necessary to determine/adjust the number of beam directions to sweep, number of symbols per beam direction allocated to the LTE and/or the oversampling factor and a half power beam width to be used by the UE. Details for determining these parameters are described further below.

According to an embodiment, the method comprises determining the value of one or more parameters per antenna panel.

Similarly to performing the beam sweeping process for each panel of an MPLTE independently, also the beam search budgeting and determining the parameters related thereto may be performed antenna panel-specifically for an MPLTE.

According to an embodiment, the method comprises determining the best beam of said at least one antenna panel using a single beam-specific metric, wherein said metric is at least partly determined based on a correlation between said guard period and a plurality of OFDM symbols of said frame.

As described in various embodiments, the cyclic prefix reception may be carried out using a beam direction other than the currently determined best beam direction. thus, the reception is susceptible to interference. However, if the determination of the best Rx beam is based on, for example, a RSSI value, it does not necessarily reveal the underlying interference, since a good RSSI value may be obtained despite the Rx beam being from a worser direction.

Now for detecting interference even when the received RSSI is good, the embodiment utilises the fact that the cyclic prefix is a repetition of the OFDM symbols of the last part of the PDSCH. Thus, by taking a correlation of the last part of PDSCH received using best beam direction with the received cyclic prefix, a correlation metric is obtained, which may be further used for determining a more interference tolerant single beam-specific metric for determining the best Rx beam.

According to an embodiment, the method comprises determining a standard deviation of time offset over multiple OFDM symbols and across vertical and horizontal polarizations of an antenna panel per beam; determining a standard deviation of frequency offset over the multiple OFDM symbols and across the vertical and the horizontal polarizations of the antenna panel per beam; wherein said metric is determined based on weighted sum of signal strength value of the beam, the correlation, the standard deviation of the time offset and the standard deviation of the frequency offset.

There may occur situations, where the mere correlation of the last part of PDSCH received using best beam direction with the received cyclic prefix cannot address the interference sufficiently. In such cases, the time offset and/or frequency offset estimations based on CP correlation may be used. A beam direction with high interference will not give consistent time/frequency offsets over consecutive symbols. However, a beam direction with good signal power will have consistent estimates over consecutive OFDM symbols.

This property can be exploited to detect interference beam directions by computing the variance or standard deviation of time and/or a frequency offset computed over multiple symbols and across each polarization of the panel. Then an even more interference tolerant single beam-specific metric, $M_{beam}$, for determining the best Rx beam may be determined as a weighted sum of signal strength value of the beam, the correlation, the standard deviation of the time offset and the standard deviation of the frequency offset. Details for determining the single beam-specific metric, $M_{beam}$, are described further below.

The procedure for beam sweeping over the Cyclic Period (CP) of the PDSCH for the search and possible update procedure of the best Rx beam may also be referred to herein as an outer loop procedure. The procedure for determining the number of beam directions to sweep, the number of symbols per beam direction and the oversampling factor may, in turn, be referred to herein as an inner loop procedure.

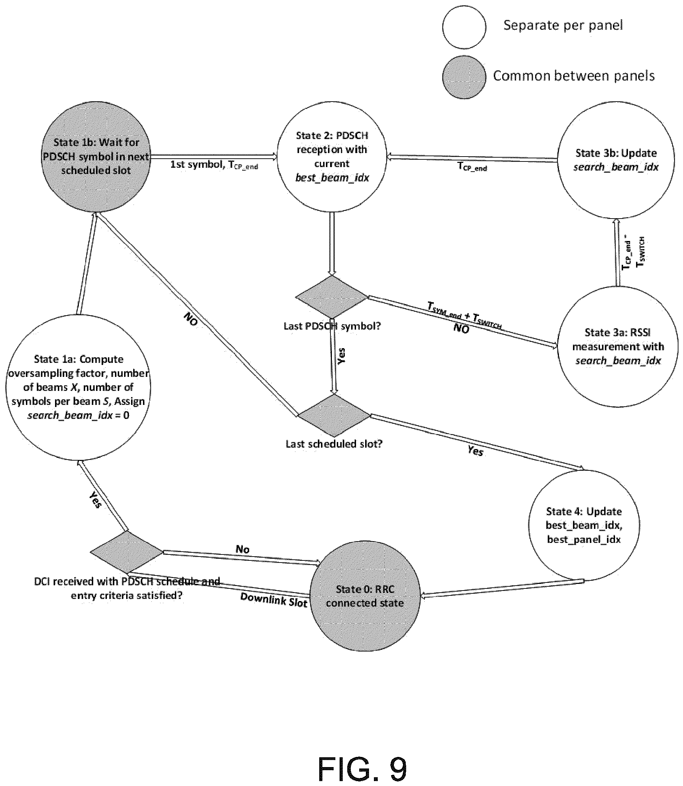

Figure 9 shows the state diagram for the outer loop procedure, also enlightening the timing requirements for avoiding impacts on the PDSCH reception. The outer loop may be run for each panel independently and may be used to update the best_beam_idx as well as the best_panel_idx. Panels which are not being used actively for PDSCH reception may have their best_beam_idx updated.

State 0

State 0 refers to the LTE being in RRC connected state and receiving a DCI scheduling PDSCH. The LTE checks for entry criteria for the outer loop scheme, wherein the entry criteria comprise one or more of following criteria:

- RSSI on the current best Rx beam is greater than a predefined threshold;
- (Number of PDSCH symbols N) x (CP time) > time needed for one beam measurement at said threshold.

State 1a

In response to meeting the entry criteria, the outer loop procedure moves to state 1a. In this state, search_beam_idx is initialized to 0 and the inner loop procedure determines the oversampling factor to be used, the number of the beam directions (X) and the number of the symbols per beam (S). The inner loop procedure may be run independently for each panel. Details of the inner loop procedure are provided further below.

State 1b

After initializing the values of different parameters in state 1a, the LTE moves to state 1b to wait for the first useful period of the PDSCH symbols to start. It is noted that the CP periods during the first PDSCH symbols may not be usable, since the first OFDM symbols are impacted by channels delay spread which can be as high as hundreds of nanoseconds. As a default, the LTE moves to state 2. However, if the delay spread is known by the LTE, the LTE can use the first symbol and move to state 3a instead of state 2.

State 2

State 2 is used for normal PDSCH reception during the useful part of the OFDM symbols, $T_{SYM}$, using the current best_beam_idx for each panel. At the end of the OFDM symbols, i.e. upon the last OFDM symbol in currently scheduled single or consecutive slots, the LTE needs to determine if there are more PDSCH slots scheduled within a certain time period. The time period can, for example, be the time until next periodic CSI-RS is scheduled. Based on determining that it is the last symbol of last slot scheduled in the time period, the LTE moves to state 4. Else if there are more slots scheduled after a gap, the LTE moves back to state 1b.

In this state, other metrics can be computed using stored samples from CP reception for making the scheme robust against interference. Details of the CP correlation based interference rejection are provided further below.

State 3a

When operating in state 2, the LTE enters state 3a at the end of a PDSCH symbol if there are more PDSCH symbols following it. The LTE switches the beam determined by the current search_beam_idx and starts RSSI measurement on it. The measurement starts after the switching time, Tswitch, following the end of the previous PDSCH symbol, TSYM_end, has elapsed. The samples received during the CP period may be stored in a memory along with the computed RSSI value. These samples can be used for further processing during or after state 2, i.e while receiving PDSCH or while processing it.

State 3b

Towards the end of cyclic prefix time, $T_{CP}$, the LTE switches the beam back to the current best Rx beam with index best_beam_idx and enters state 3b. This may be performed $T_{switch}$ nanoseconds before the end of $T_{CP}$ to ensure that the useful part of PDSCH symbol is not impacted. In state 3b, the UE updates the search_beam_idx based on the number of symbols allocated to each beam direction. At the end of $T_{CP}$, the LTE moves back to state 2 for normal PDSCH reception.

State 4

Once the measurements on all beam directions are completed, the collected metrics from each beam directions are used to update the best_beam_idx on all panels for which the outer loop procedure is run, as well as the best_panel_idx. After this the LTE moves back to state 0.

The update procedure may be carried out, for example, as follows:

$$\text{for panel\_idx} = 1 : \text{num\_panels}$$

$$\text{for beam\_idx} = 0 : \text{num\_beams[panel\_idx]}$$

$$M_{beam\_idx,panel\_idx} = \text{compute\_beam\_metric} (RSSI_{beam\_idx,panel\_idx}, CORR_{beam\_idx,panel\_idx})$$

$$\text{If}(M_{beam\_idx,panel\_idx} > M_{best\_beam\_idx,best\_panel\_idx})$$

$$\text{best\_beam\_idx[panel\_idx]} = \text{beam\_idx}$$

$$\text{if}(M_{best\_beam\_idx,panel\_idx} > M_{best\_beam\_idx,best\_panel\_idx})$$

$$\text{best\_panel\_idx} = \text{panel\_idx}$$

$$\text{endif}$$

$$\text{endif}$$

$$\text{end}$$

$$\text{end}$$

Herein, $M_{beam\_idx,panel\_idx}$ is a metric computed for a particular beam direction on panel with index panel_idx, said metric being tolerant to interference, as explained upon the CP correlation based interference rejection further below.

Inner loop procedure

The inner loop procedure, as referred to above e.g. in connection with the state 1a of the outer loop procedure, is used to determine/adjust the number of beam directions X to sweep, the number of symbols S per beam direction and/or the oversampling factor to be used.

Determining S

The settling time of the channelization filter is inversely proportional to the bandwidth. For example, if the RF transceiver has a bandwidth of 400 MHz, then the channelization filter used for PDSCH reception can have a bandwidth from 50 MHz to 400 MHz. The settling time of the filter should be added to the beam switch time to determine the total switching time $T_{SWITCH}$:

$$T_{SWITCH} = T_{BEAMSWITCH} + T_{SETTLING}$$

Also the time required for measuring each beam direction $T_{MEASURE}$ can be determined based on the current RSSI of best beam. From this, the number of symbols S for a beam direction can be computed, for example, using the ceiling operator rounding up to the following integer value as follows:

$$S = ceil(T_{MEASURE}/(T_{CP} - T_{SWITCH}))$$

Determining X, Oversampling factor and Beamwidth

The number of beams that a particular LTE panel can form is dependent on LTE hardware limitations, such as analogue phase shifter resolution and manufacturer beam design strategy. Effects that are important to consider are the beamwidth and oversampling factor. For example, as shown in **Error! Reference source not found.,** a LTE with a panel consisting of 4 antenna elements can form beams with 3dB half power beamwidths (HPBW) of 90°, 45°, 22.5°. Using different oversampling factors, the LTE can beamform in multiple directions depending on the beamwidth.

After having determined S, the LTE may determine maximum value of X, for example, using the floor operator rounding down to the previous integer value as follows:

$$X_{max} = floor(N/S)$$

Based on the computed value of $X_{max}$, the LTE can then determine half power beamwidth (HPBW) and the oversampling factor which can give up to $X \leq X_{max}$ number of beams.

These beams can be selected differently for each panel. For example, for a panel being actively used for PDSCH reception the number of beam directions $X$, the oversampling factor and the beamwidth can be chosen such that only beam directions around current best_beam_idx are scanned. On the other hand, for an inactive panel as many beam directions as possible with as minimum overlap as possible could be selected.

CP correlation-based interference rejection

As described above, the cyclic prefix reception is carried out using a beam direction other than the currently determined best beam direction. Consequently, the CP reception is susceptible to interference originating from a worser direction, which may nevertheless provide a good RSSI value; i.e. a good RSSI value may not necessarily reveal anything about underlying interference. Thus, a way of detecting interference even when the received RSSI is good is needed. It is noted that in the embodiments disclosed herein, the interference is considered to be co-channel.

The cyclic prefix CP is a repetition of the last part of OFDM symbol. Thus, by taking a correlation of the last part of PDSCH received using best beam direction in state 2 with the received cyclic prefix, a correlation metric CORR can be derived for each polarization per MIMO layer.

A correlator computes correlation of samples received during CP time of length L with one of the following options:

a) A straightforward option is to compute the correlation with the raw PDSCH samples received during the last part of PDSCH symbol corresponding to the cyclic prefix.

b) A second option is for LTEs which re-modulate the decoded PDSCH to reconstruct the transmitted signal for each MIMO layer. The re-modulated signal before precoding for each MIMO layer can be used to derive a correlation metric for each MIMO layer per polarization.

The metric using the second option is explained here in more detail. The received signal during the CP period can be written as:

$$y = A \otimes x + I + N$$

where x is the IFFT of transmitted vector of modulated data on one particular MIMO layer of length L, A is a sparse vector of impulse response of channel and precoder applied for that MIMO layer, I is the received interference vector of length L, N is a noise vector of length L, where the noise is assumed to be white gaussian noise, and $\otimes$ operator is used to represent circular convolution.

By correlating y with $x^H$ (obtained after re-encoding and re-modulation) a correlation metric per MIMO layer is obtained:

$$CORR = corr(y, x^H) = corr(A \otimes x, x^H) + corr(I, x^H) + corr(N, x^H)$$

Now, $E(corr(N,x^H)) = E(N)*E(x) = 0$ because E(N) = 0.

If the transmitted data and data in the interference are both zero mean pseudo random variables, then:

$$E(corr(I, x^H)) \simeq E(I) * E(x^H) \simeq 0$$

Thus, $CORR \simeq corr(A \otimes x, x^H)$ when $x$ and $I$ are both zero mean pseudorandom variables.

However, in practice *corr(I, x^H)* is not zero and can have significant values when RSSI value of interference is large, for example, at a cell edge.

In order to detect interference in such scenarios, time offset or frequency offset estimations based on CP correlation may be used. A beam direction with high interference will not give consistent time/frequency offsets over consecutive symbols. However, a beam direction with good signal power will have consistent estimates over consecutive OFDM symbols. This property can be exploited to detect interference beam directions by computing the variance or standard deviation of time, STD_TO, and frequency offset, STD_FO computed over multiple symbols and across polarizations:

$$STD\_TO = std(TO_V(1), TO_V(2) \ldots TO_V(S), TO_H(1), TO_H(2), \ldots TO_H(S))$$

$$STD\_FO = std(FO_V(1), FO_V(2) \ldots FO_V(S), FO_H(1), FO_H(2), \ldots FO_H(S))$$

where S is the number of symbols for measurement per beam directions.

Finally, the computed metrics can be used to determine a single metric per beam direction. For example, the RSSI values may be add together, the CORR values may be add together and then weighing the added CORR, RSSI, STD_TO, STD_FO values to get to a single metric per beam:

$$M_{beam} = w_R * \Sigma\,\mathrm{RSSI} + w_C * \Sigma\,\mathrm{CORR} + w_{TO} * \mathrm{STD\_TO} + w_{FO} * \mathrm{STD\_FO}$$

where $w_R$ is the weight for sum of RSSI values, $w_C$ is the weight for sum of CORR values, $w_{TO}$ is the weight for STD_TO and $w_{FO}$ is the weight for STD _FO. The weights may be obtained, for example, from a pre-determined table based on RSSI/RSRP of current best beam direction.

The resulting metric $M_{beam}$ will be tolerant to interference as the correlation value of interference will be low and the values of the standard deviation of time and the frequency offset will be high.

In the following, some implementation examples for an apparatus for carrying out the embodiments are given.

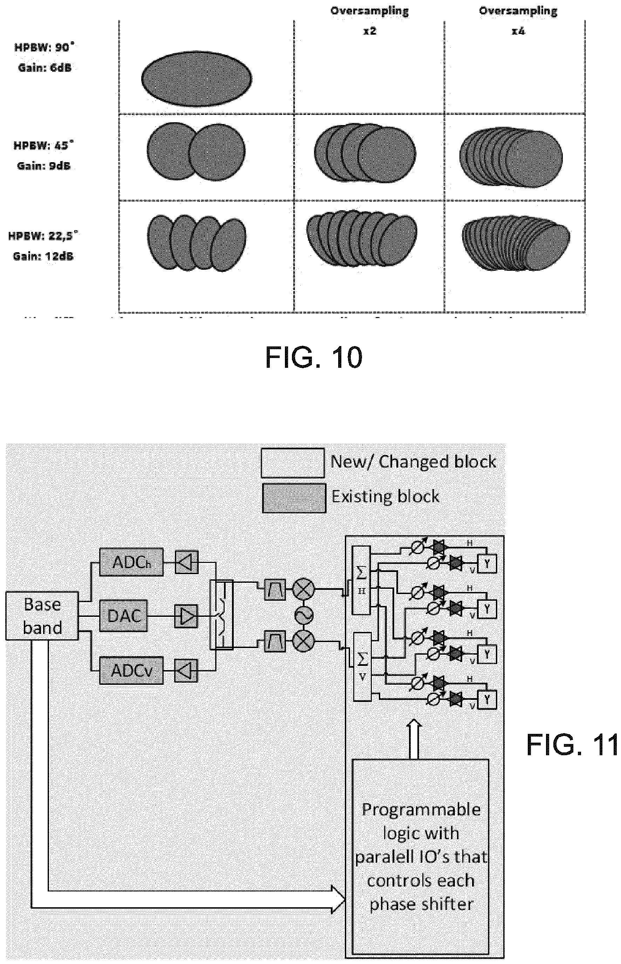

Figure 11 shows a typical FR2 transmit/receive chain comprising of RF front end patch array panels, transceiver, and a digital baseband with analog-digital converters (ADCs) and digital-analog converters (DACs) for each polarization (horizontal (H), vertical (V)). In this example, there is one ADC per polarization, assuming it is an array of patch antenna elements with each patch receiving in horizontal and vertical polarization. The output of each patch array is combined by the analog beamforming circuitry. The beamforming circuitry is controlled from the baseband.

The exact control of the phase shifters may be done by use of a dedicated programmable logic that is programmed as per the required code book and a scanning sequence is started where the IO's required to control the phase shifters are programmed in a fixed sequence, where the exact timing of events may be controlled by a dedicated synchronisation signal. Such logic may be integrated inside the antenna module to ensure stable and fast control as the capacitive loading of such control lines can be critical in some cases and limit the potential speed of the programming logic.

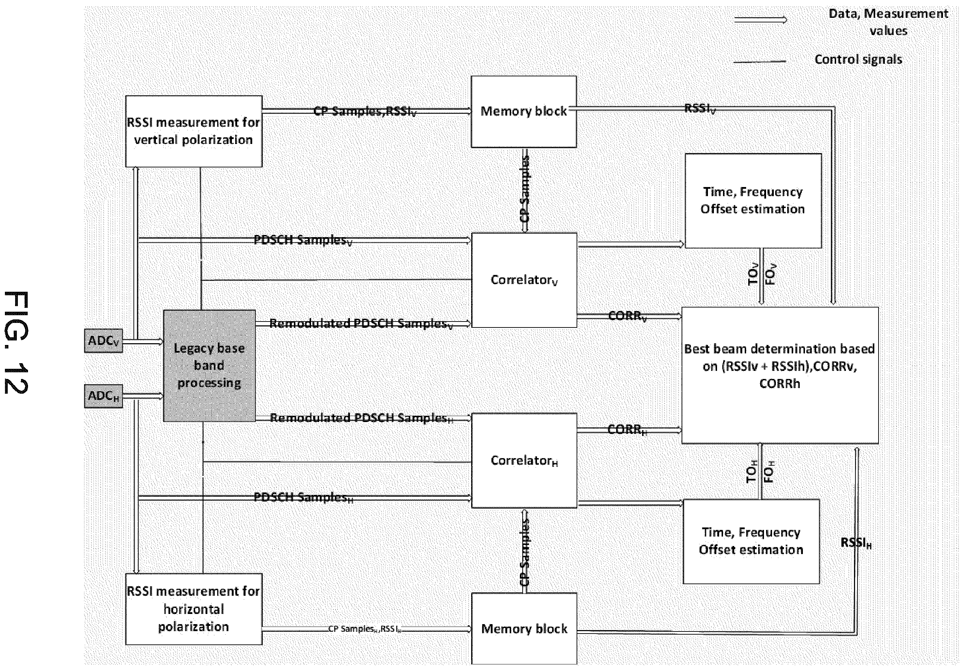

The entire scheme of the outer and the inner loop procedures along with the CP correlators, as described above, may be implemented in a digital logic present in the baseband unit. An example of the implementation of the scheme in the baseband unit is shown in Figure 12. Regarding the operation of the scheme, references to the states of the state diagram in Figure 9 are provided.

The legacy baseband processing in Figure 12 refers to the existing processing of 5G NR control, data and reference signals in uplink and downlink. This includes RX processing of PDSCH and, in more advanced LTEs, also encoding and re-modulation of decoded PDSCH to reconstruct the transmitted signal. This block may be enhanced with logic for the outer loop and the inner loop procedures. The legacy block may also be enhanced to control the new RSSI measurement blocks, correlators and the best beam direction determination block.

RSSI measurement blocks

The samples from the ADCs during the CP time (up to TCP_end) are routed to the RSSI measurement block (state 3a), which calculates the RSSI of the signal sampled by the corresponding ADC. In this simplified example, one RSSI measurement block is present per polarization (RSSIv, RSSI_H). Generally, there may be one RSSI measurement block per polarization and per antenna array. The RSSI is computed by simply computing the sum of absolute values of complex samples received from the ADC during one or more CP period used for a beam direction.

#### Memory Blocks

The samples received during the CP period are also stored in a memory block along with the computed RSSI value. These samples can be used for further checks during or after state 2, i.e. while receiving PDSCH or while processing it. The computed RSSI values as well as correlation metrics are also stored in these memory blocks for each beam direction.

#### Correlator blocks

These correlators are used to compute the CORR metric for each polarization (CORRv, $CORR_H$) per beam direction. As shown, a correlation with both last part of PDSCH symbol as well as with re-modulated PDSCH samples is possible.

#### Time & Frequency Offset Estimation blocks

These blocks estimate the time and frequency offsets for each polarization based on the correlation values received for the respective polarizations.

#### Best beam determination block

This block computes the single beam-specific metric, $M_{beam}$, for a particular beam based on the RSSI, the correlations, the time offsets and the frequency offsets measured on each polarization. The computation of the standard deviations STD_TO, STD_FO is also carried out in this block. It also updates the best_beam_idx and the best_panel_idx as explained in connection with the outer loop procedure.

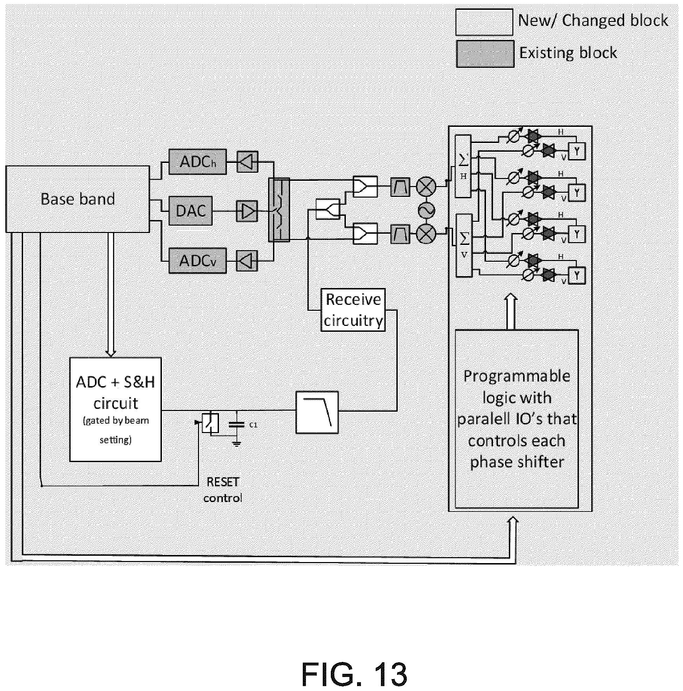

It is also possible to implement at least some of the embodiments based only on analog components. Figure 13 shows an example with a few enhancements to digital baseband to implement the embodiments. herein, the FR2 transmit/receive chain with programmable logic integrated into antenna module is similar to the above embodiment. This embodiment is based only on RSSI measurements and hence cannot reject interference. It is, however, noted that interference in FR2 with highly directional beams is not a severe problem.

The output of each FR2 RF front end panel is routed to a mixer, which produces an inter-frequency (IF) output and is further routed to a tunable bandpass filter. If the IF is less than 7 GHz, then the bandpass filter can be implemented, for example, using a 5 GHz Wifi filter or a Band 41 filter etc. The bandpass filter can be tuned to eliminate interference outside of the CSI-RS bandwidth.

The output of bandpass filter for horizontal and vertical polarization is routed to a conventional FR2 transceiver and further through ADC/DAC to baseband unit. The same output of bandpass filter is routed to a parallel receive circuitry for further down conversion, if necessary. Herein, for example a low IF receiver, single or dual conversion receiver followed by a diode detector, or ASK receive circuitry may be used. This is then fed via a low pass filter to a power integrator with a reset switch. The integrator may be implemented using a capacitor, which does an analog raw power measurement (RSSI). The output voltage of the capacitor is then sampled by a ADC with sample and hold (S&H) circuitry at the end of time slice. After each measurement, the reset line is pulled and the integrator is reset before starting measurement on the next beam.

#### Baseband changes

The timing of ADC sampling and reseting of power integrators is controlled directly by the baseband unit. The baseband unit controls the exact timing of integrating power from a specific beam direction and also switching back to current best beam direction for normal PDSCH reception. It programs the logic on the antenna module which provide beamforming weights and control the timing of the beamforming circuitry in the RF front end.

The outer loop and the inner loop procedures are to be implemented in the baseband unit. Also the RSSI measured over different symbols but in same beam direction needs to be summed. For this purpose, the ADC sampled values are also fed to the baseband unit, which can then sum the sampled values over multiple symbols belonging to same beam directions to provide the RSSI measurement for a specific beam direction. Lastly, the best beam determination block needs to be added to the baseband logic similar to the above embodiment. However, in this embodiment the best beam determination block carries out only RSSI measurements.

If this embodiment is implemented in an MPLTE for each panel, the process may preferably be limited to only updating the best_beam_idx on the active panel. This is because running the procedures outlined above without having interference rejection may catch strong interferers from other panels.

The method and the embodiments related thereto may provide significant advantages. For example, a LTE may better align its Rx beams without any network assistance. Therefore, higher throughput for the LTE may be obtained and the number of occasions triggering P3 procedure are reduced. Moreover, since the LTE tracks the best beams during PDSCH reception using lesser number of beams to measure during P3 than normally, the LTE may report a lower number of "maxNumberRxBeams" capability (as defined in TS 38.331) to the network than the actual number of Rx beams it supports. Furthermore, an MPLTE may track best beams on each panel during PDSCH reception while also rejecting beams/panels with interference. Thus, the RSRP measurements can be done using best beams on each panel and reported to network thereafter.

An apparatus, such as a LTE, according to an aspect comprises one or more antenna panels for receiving beams; means for receiving a frame structure comprising a plurality of time slots, wherein each time slot comprises a plurality of orthogonal frequency-division modulated (OFDM) symbols and at least one guard period; means for performing beam sweeping over a plurality of received beams during said guard period; and means for aligning the apparatus to receive on a best beam of at least one antenna panel determined based on said beam sweeping.

According to an embodiment, the apparatus comprises means for switching from a currently determined best beam to measuring at least another beam after a start of said guard period; and means for switching to receive on the best beam of the at least one antenna panel before an end of said guard period.

According to an embodiment, the apparatus comprises means for measuring said at least another beam during multiple guard periods; and means for determining the best beam of at least one antenna panel.

According to an embodiment, the apparatus comprises means for determining the best beam for a plurality of antenna panels during said multiple guard periods; and means for aligning the apparatus to receive on an antenna panel receiving the best beam among said plurality of antenna panels.

According to an embodiment, said frame structure is a Physical Downlink Shared Channel (PDSCH) frame and said guard period comprises a cyclic prefix or a part of it within said frame.

According to an embodiment, the apparatus comprises means for determining a value of one or more parameters so as to enable to perform said beam sweeping over the plurality of received beams during said guard period.

According to an embodiment, said one or more parameters comprise:

- number of beam directions to sweep;
- number of symbols per beam direction to sweep; and/or
- an oversampling factor and a half power beam width to be used in said beam sweeping.

According to an embodiment, the apparatus comprises means for determining the value of one or more parameters per antenna panel.

According to an embodiment, the apparatus comprises means for determining the best beam of said at least one antenna panel using a single beam-specific metric, wherein said metric is at least partly determined based on a correlation between said guard period and a plurality of OFDM symbols of said frame.

According to an embodiment, the apparatus comprises means for determining a standard deviation of time offset over multiple OFDM symbols and across vertical and horizontal polarizations of an antenna panel per beam; means for determining a standard deviation of frequency offset over the multiple OFDM symbols and across the vertical and the horizontal polarizations of the antenna panel per beam; wherein said metric is determined based on weighted sum of signal strength value of the beam, the correlation, the standard deviation of the time offset and the standard deviation of the frequency offset.

According to an embodiment, the apparatus comprises means for checking, prior to performing the beam sweeping during said guard period, that a signal level of a currently best beam is more than or equal to a predetermined threshold value; and if affirmative, performing the beam sweeping during said guard period.

An apparatus according to a further aspect comprises one or more antenna panels, at least one processor and at least one memory, said at least one memory stored with computer program code thereon, the at least one memory and the computer program code configured to, with the at least one processor, cause the apparatus at least to perform: receive a frame structure comprising a plurality of time slots, wherein each time slot comprises a plurality of orthogonal frequency-division modulated (OFDM) symbols and at least one guard period; perform beam sweeping over a plurality of received beams during said guard period; and align the apparatus to receive on a best beam of at least one antenna panel determined based on said beam sweeping.

According to an embodiment, the apparatus comprises code configured to cause the apparatus to switch from a currently determined best beam to measuring at least another beam after a start of said guard period; and switch to receive on the best beam of the at least one antenna panel before an end of said guard period.

According to an embodiment, the apparatus comprises code configured to cause the apparatus to measure said at least another beam during multiple guard periods; and determine the best beam of at least one antenna panel.

According to an embodiment, the apparatus comprises code configured to cause the apparatus to determine the best beam for a plurality of antenna panels during said multiple guard periods; and align the apparatus to receive on an antenna panel receiving the best beam among said plurality of antenna panels.

According to an embodiment, said frame structure is a Physical Downlink Shared Channel (PDSCH) frame and said guard period comprises a cyclic prefix or a part of it within said frame.

According to an embodiment, the apparatus comprises code configured to cause the apparatus to determine a value of one or more parameters so as to enable to perform said beam sweeping over the plurality of received beams during said guard period.

According to an embodiment, said one or more parameters comprise:

- number of beam directions to sweep;
- number of symbols per beam direction to sweep; and/or
- an oversampling factor and a half power beam width to be used in said beam sweeping.

According to an embodiment, the apparatus comprises code configured to cause the apparatus to determine the value of one or more parameters per antenna panel.

According to an embodiment, the apparatus comprises code configured to cause the apparatus to determine the best beam of said at least one antenna panel using a single beam-specific metric, wherein said metric is at least partly determined based on a correlation between said guard period and a plurality of OFDM symbols of said frame.

According to an embodiment, the apparatus comprises code configured to cause the apparatus to determine a standard deviation of time offset over multiple OFDM symbols and across vertical and horizontal polarizations of an antenna panel per beam; determine a standard deviation of frequency offset over the multiple OFDM symbols and across the vertical and the horizontal polarizations of the antenna panel per beam; wherein said metric is determined based on weighted sum of signal strength value of the beam, the correlation, the standard deviation of the time offset and the standard deviation of the frequency offset.

According to an embodiment, the apparatus comprises code configured to cause the apparatus to check, prior to performing the beam sweeping during said guard period, that a signal level of a currently best beam is more than or equal to a predetermined threshold value; and if affirmative, perform the beam sweeping during said guard period.

Such apparatuses may comprise e.g. the functional units disclosed in any of the Figures 1- 4 for implementing the embodiments.

A further aspect relates to a computer program product, stored on a non-transitory memory medium, comprising computer program code, which when executed by at least one processor, causes an apparatus comprising one or more antenna panels for receiving beams at least to perform: receive a frame structure comprising a plurality of time slots, wherein each time slot comprises a plurality of orthogonal frequency-division modulated (OFDM) symbols and at least one guard period; perform beam sweeping over a plurality of received beams during said guard period; and align the apparatus to receive on a best beam of at least one antenna panel determined based on said beam sweeping.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

**Claims**

1. An apparatus comprising:

   one or more antenna panels for receiving beams;
   means for receiving a frame structure comprising a plurality of time slots, wherein each time slot comprises a plurality of orthogonal frequency-division modulated (OFDM) symbols and at least one guard period;
   means for performing beam sweeping over a plurality of received beams during said guard period; and
   means for aligning the apparatus to receive on a best beam of at least one antenna panel determined based on said beam sweeping.

2. The apparatus according to claim 1, comprising
   means for switching from a currently determined best beam to measuring at least another beam after a start of said guard period; andmeans for switching to receive on the best beam of the at least one antenna panel before an end of said guard period.

3. The apparatus according to claim 2, comprising

   means for measuring said at least another beam during multiple guard periods; and
   means for determining the best beam of at least one antenna panel.

4. The apparatus according to claim 3, comprising

   means for determining the best beam for a plurality of antenna panels during said multiple guard periods; and
   means for aligning the apparatus to receive on an antenna panel receiving the best beam among said plurality of antenna panels.

5. The apparatus according to any preceding claim, wherein said frame structure is a Physical Downlink Shared Channel (PDSCH) frame and said guard period comprises a cyclic prefix or a part of it within said frame.

6. The apparatus according to any preceding claim, comprising
   means for determining a value of one or more parameters so as to enable to perform said beam sweeping over the plurality of received beams during said guard period.

7. The apparatus according to claim 6, wherein said one or more parameters comprise:

   - number of beam directions to sweep;
   - number of symbols per beam direction to sweep; and/or
   - an oversampling factor and a half power beam width to be used in said beam sweeping.

8. The apparatus according to claim 6 or 7, comprising
   means for determining the value of one or more parameters per antenna panel.

9. The apparatus according to any preceding claim, comprising
   means for determining the best beam of said at least one antenna panel using a single beam-specific metric, wherein said metric is at least partly determined based on a correlation between said guard period and a plurality of OFDM symbols of said frame.

10. The apparatus according to claim 9, comprising

    means for determining a standard deviation of time offset over multiple OFDM symbols and across vertical and horizontal polarizations of an antenna panel per beam;
    means for determining a standard deviation of frequency offset over the multiple OFDM symbols and across the vertical and the horizontal polarizations of the antenna panel per beam;
    wherein said metric is determined based on weighted sum of signal strength value of the beam, the correlation, the standard deviation of the time offset and the standard deviation of the frequency offset.

11. The apparatus according to any preceding claim, comprising

means for checking, prior to performing the beam sweeping during said guard period, that a signal level of a currently best beam is more than or equal to a predetermined threshold value; and

if affirmative, performing the beam sweeping during said guard period.

12. A method comprising:

receiving, by an apparatus comprising one or more antenna panels for receiving beams, a frame structure comprising a plurality of time slots, wherein each time slot comprises a plurality of orthogonal frequency-division modulated (OFDM) symbols and at least one guard period;

performing beam sweeping over a plurality of received beams during said guard period; and

aligning the apparatus to receive on a best beam of at least one antenna panel determined based on the beam sweeping.

13. The method according to claim 12, comprising

switching from a currently determined best beam to measuring at least another beam after a start of said guard period; and

switching to receive on the best beam of the at least one antenna panel before an end of said guard period.

14. The method according to claim 13, comprising

measuring said at least another beam during multiple guard periods; and

determining the best beam of at least one antenna panel.

15. The method according to claim 14, comprising

determining the best beam for a plurality of antenna panels during said multiple guard periods; and

aligning the apparatus to receive on an antenna panel receiving the best beam among said plurality of antenna panels.

16. The method according to any of claims 12 - 15, wherein said frame structure is a Physical Downlink Shared Channel (PDSCH) frame and said guard period comprises a cyclic prefix or a part of it within said frame.

FIG. 1

FIG. 2

306

300

304

302

314

310

308

312

# FIG. 3

A2

A1

A3

# FIG. 4

P1

P2

P3

SSB2

SSBn

PRACH

CSI1  CSI2

CSI4  CSI3

SSBn

RSRP on best beam

CSI3 repeated

FIG. 5

600 — Receive, by an apparatus comprising one or more antenna panels, a frame structure comprising a plurality of time slots, wherein each time slot comprises a plurality of OFDM symbols and at least one guard period

602 — Perform beam sweeping over a plurality of received beams during said guard period

604 — Align the apparatus to receive on a best beam of at least one antenna panel determined based on the beam sweeping

## FIG. 6

| CP | OFDM symbol | |

## FIG. 7a

OFDM symbol with CP (8.917 μs)

| CP | DL OFDM | | CP | DL OFDM | |

Guard period

0.586 μs    FFT window (8.331 μs)    0.586 μs   0.586 μs    FFT window (8.331 μs)

## FIG. 7b

| Symbol number | 0 | 1 | 2 | 3 | 4 | . | . | . | 12 | 13 |
|---|---|---|---|---|---|---|---|---|---|---|
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |

Normal P3 measurement:

Best beam PDSCH reception

Novel P3 measurement:

CP: Beam1 RSSI, Best beam PDSCH
CP: Beam1 RSSI, Best beam PDSCH
CP: Beam2 RSSI, Best beam PDSCH
...
...
CP: Beam6 RSSI, Best beam PDSCH
CP: Beam6 RSSI, Best beam PDSCH

$T_{cp\_end}$   $T_{SYM\_end}$   $T_{cp\_end}$   $T_{SYM\_end}$   $T_{cp\_end}$   $T_{SYM\_end}$   $T_{cp\_end}$   $T_{SYM\_end}$   $T_{cp\_end}$   $T_{SYM\_end}$

FIG. 8

FIG. 9

FIG. 10

FIG. 11

FIG. 12

FIG. 13

Europäisches
Patentamt
European
Patent Office
Office européen
des brevets

# EUROPEAN SEARCH REPORT

**Application Number**

EP 23 15 5025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/195754 A1 (LI LINBO [US] ET AL) 5 August 2010 (2010-08-05) | 1-9, 11-16 | INV. H04B7/08 |
| A | * paragraphs [0045] – [0048]; figures 3,4 * <br> * paragraph [0063]; claim 1; figure 5 * | 10 | |
| Y | US 2021/234586 A1 (RAGHAVAN VASANTHAN [US] ET AL) 29 July 2021 (2021-07-29) | 1-9, 11-16 | |
| A | * paragraphs [0103] – [0104], [0107] – [0108]; figures 2,3 * | 10 | |

**TECHNICAL FIELDS SEARCHED (IPC)**

H04B

The present search report has been drawn up for all claims

| Place of search | Date of completion of the search | Examiner |
|---|---|---|
| Munich | 22 June 2023 | Sälzer, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 5025**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-06-2023**

| Patent document cited in search report | | Publication date | Patent family member(s) | | Publication date |
|---|---|---|---|---|---|
| US 2010195754 | A1 | 05-08-2010 | CN | 102362444 A | 22-02-2012 |
| | | | EP | 2392084 A1 | 07-12-2011 |
| | | | KR | 20110112850 A | 13-10-2011 |
| | | | TW | 201042939 A | 01-12-2010 |
| | | | US | 2010195754 A1 | 05-08-2010 |
| | | | WO | 2010088612 A1 | 05-08-2010 |
| US 2021234586 | A1 | 29-07-2021 | CN | 115004574 A | 02-09-2022 |
| | | | EP | 4097870 A1 | 07-12-2022 |
| | | | US | 2021234586 A1 | 29-07-2021 |
| | | | WO | 2021154655 A1 | 05-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR; Physical layer procedures for data. *TS 38.214 3GPP TSG RAN WG1,* 03 April 2020